# EUROPEAN PATENT SPECIFICATION

(11) **EP 3 678 284 B1**
(45) Date of publication and mention of the grant of the patent: **03.04.2024**
(21) Application number: 18849955.2
(22) Date of filing: 06.08.2018
(51) Int. Cl.: H02K 3/46, H02K 3/04, H02K 3/28, H02K 3/50, H02K 3/52, H02K 21/14

(54) **MOTOR INSULATOR AND BRUSHLESS MOTOR**
MOTORISOLATOR UND BÜRSTENLOSER MOTOR
ISOLATEUR DE MOTEUR ET MOTEUR SANS BALAIS

(30) Priority: 29.08.2017 JP 2017164007
(43) Date of publication of application: 08.07.2020
(73) Proprietor: Mitsuba Corporation, Kiryu-shi, Gunma 376-8555 (JP)
(72) Inventor: OHORI Ryo, Kiryu-shi Gunma 376-8555 (JP); SHIODA Naoki, Kiryu-shi Gunma 376-8555 (JP)
(74) Representative: Hoffmann Eitle
(86) International application number: PCT/JP2018/029378
(87) International publication number: WO 2019/044393

(56) References cited:
- EP-A1- 2 551 993
- CN-A- 105 553 156
- DE-A1-102015 212 821
- JP-A- 2007 267 571
- JP-A- 2008 167 604
- JP-A- 2013 201 820
- JP-A- 2015 171 239
- JP-A- 2017 127 146
- US-A1- 2016 079 822

## Description

### Technical Field

The present invention relates to a brushless motor having an insulator for coil insulation.

### Background Art

Generally, in an inner-rotor type brushless motor, a stator having a coil wound therearound is disposed in a steel yoke, and a rotor having a magnet is freely rotatably disposed inside the stator. Further, on the stator side, an insulator is mounted as a component for insulating between a stator core and a coil, as in JP 2013-038949 A. The coil is wound around the tooth part of the stator core through the insulator. The coil is wound around each of the tooth part such that the winding-start and winding-end portions thereof are made to pass through between adjacent teeth. Then, a crossover wire routed at the back side of the teeth is used to connect coils of the same phase or coils of different phases, whereby one motor winding is formed as a whole.
Documents JP 2015-133808 A and JP Patent Application No. 2016-005730 discloses other examples of the prior art.

In addition, further prior art is described in documents JP 2013 201820 A, US 2016/079822 A1, EP 2 551 993 A1, DE 10 2015 212821 A1, CN 105 553 156 A, and JP 2017 127146 A.

### Disclosure of the Invention

### Problems to be Solved by the Invention

However, in the above-described winding form, a plurality of crossover wires are arranged at the back side of the teeth. As a result, the crossover wires densely exist in a narrow space, resulting in wiring congestion. Further, due to a large number of crossover wires and to a long wiring, coil resistance correspondingly increases.

On the other hand, in the above insulator, electrical connection is made through a terminal provided at the back side of the teeth. However, in such a structure, when winding is performed on the teeth having the terminal at its back side, a terminal mounting part holding the terminal is applied with a radially outward force by tension generated at the time of winding, causing the terminal mounting part to fall down radially outward, which may disadvantageously incline the terminal.

### Means for Solving the Problems

A brushless motor in accordance with the present invention is defined in claim 1. The dependent claims define further embodiments of the invention.

### Advantageous Effects of the Invention

According to the motor insulator of the present invention, the insulator mounted to the stator for insulation of a coil includes coil winding parts each wound with a winding, terminal mounting parts each having a coil connection terminal to which the winding is connected, and first guide parts configured to guide the winding, and the first guide parts each have an opening for passing therethrough a winding-start portion of the coil. Thus, the winding wire that has conventionally been routed to between adj acent teeth along the guide part so as to be wound around a coil winding part therefrom can be introduced to the coil winding part side through the opening. The number of windings disposed between the teeth can therefore be reduced to alleviate wiring congestion between the teeth. Further, the length of the winding is reduced, and coil resistance is reduced correspondingly.

According to the brushless motor of the present invention, an insulator mounted to the stator of the brushless motor for insulation of a coil includes: coil winding parts each wound with the winding; terminal mounting parts each having a coil connection terminal to which the winding is connected; and first guide parts configured to guide the winding, and an opening configured with a winding start portion of the coil inserted therethrough is formed in the first guide part. Thus, the winding wire that has conventionally been routed to between adjacent teeth along the guide part so as to be wound around a coil winding part therefrom can be introduced to the coil winding part side through the opening. The number of windings disposed between the teeth can therefore be reduced to alleviate wiring congestion between the teeth. Further, the length of the winding is reduced, and coil resistance is reduced correspondingly.

### Brief Description of the Drawings

FIG. 1 is an explanatory view illustrating the configuration of a motor unit with speed reduction mechanism using a brushless motor which is an embodiment of the present invention;
FIG. 2 is a side view of the brushless motor as viewed in the axial direction thereof;
FIG. 3 is an explanatory view illustrating the configuration of an insulator mounted to a stator core;
FIG. 4 is a connection diagram of the coil;
FIG. 5 is an explanatory view illustrating the winding state of the coil;
FIG. 6 is a winding developed view of the coil;
FIG. 7 is an explanatory view illustrating a state where the winding is hooked around the guide wall provided in a terminal mounting part of the insulator; and
FIG. 8 is an explanatory view illustrating the configuration of the terminal mounting part in the insulator.

### Best Mode for Carrying Out the Invention

Hereinafter, an embodiment of the present invention will be described in detail based on the drawings. An object of the embodiment to be described below is to alleviate the congestion of the crossover wires in a brushless motor and shorten the wiring length to thereby reduce coil resistance. Another object of the embodiment is to prevent the terminal mounting part from falling down by tension at the time of winding to thereby prevent the terminal from inclining.

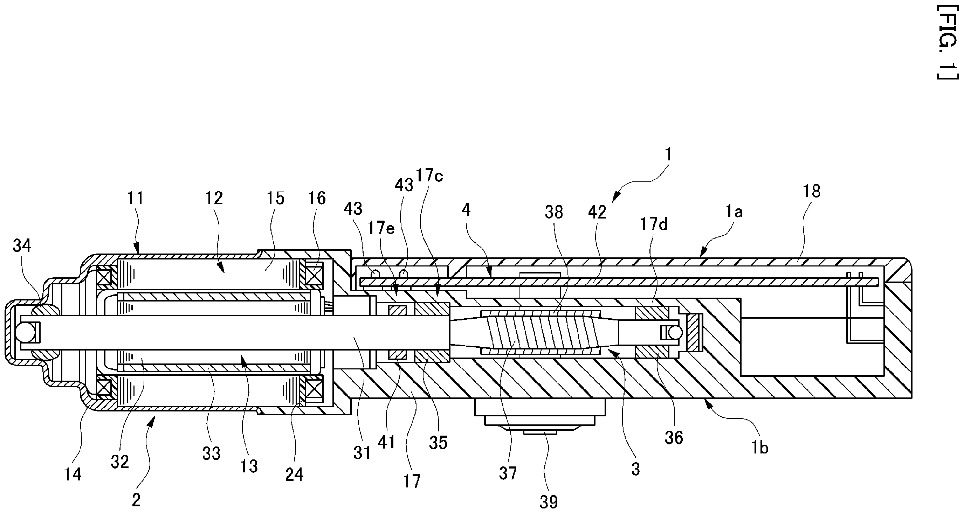

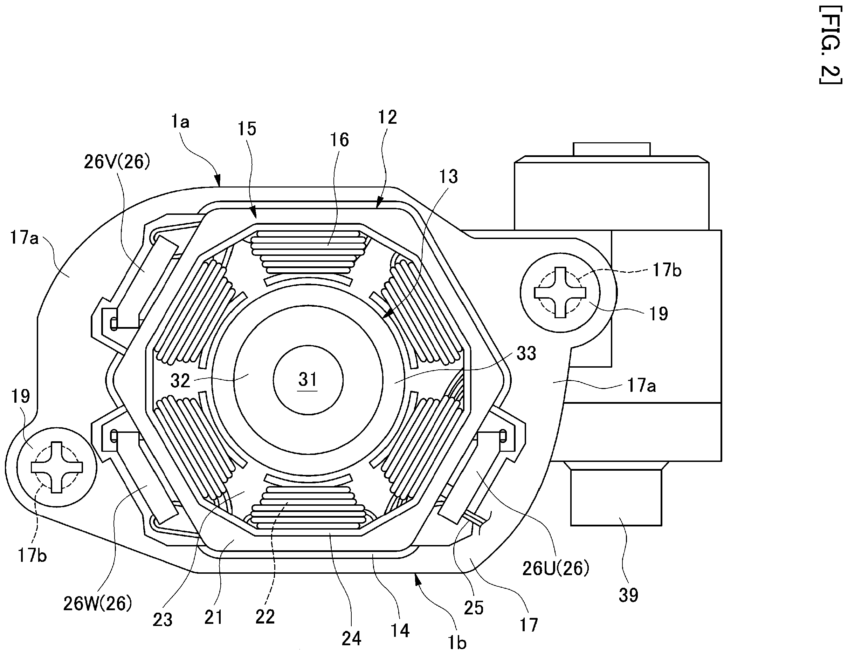

FIG. 1 is an explanatory view illustrating the configuration of a motor unit 1 with speed reduction mechanism using a brushless motor 11 which is an embodiment of the present invention, and FIG. 2 is a side view of the brushless motor 11 as viewed in the axial direction thereof. The motor unit 1 of FIG. 1 is a motor with speed reduction mechanism having a so-called electromechanically integrated structure in which a motor and a controller are integrated with each other. The motor unit 1 includes a motor part 2 having the brushless motor 11, a speed reduction mechanism part 3 using a worm gear, and a control part 4. The control part 4 has mounted thereon a control circuit for controlling drive of the brushless motor 11. The motor unit 1 is used as, e.g., a drive source of a vehicle electric sunroof.

The motor part 2 is provided with the brushless motor 11. The brushless motor 11 is of an inner-rotor type brushless motor having a stator 12 provided on the outer side and a rotor 13 provided on the inner side. The stator 12 has a motor case 14 serving also as a yoke, a stator core (core member) 15 fixed to the inner peripheral side of the motor case 14, and a coil 16 wound around the stator core 15. The motor case 14 is made of iron or the like and has a bottomed cylindrical shape, the cross section of which is hexagonal. The opening portion of the motor case 14 is attached with a frame 17 made of synthetic resin. The upper portion of the frame 17 is opened, and a cover 18 is attached to the opening portion. A flange part 17a of the frame 17 has formed therein a screw hole 17b for attaching the motor. A screw 19 is screwed into the screw hole 17b. The motor case 14 is fixed to the flange part 17a by the screw 19.

The stator core 15 has an integrated core structure formed by laminating a large number of steel plates. The stator core 15 has a hexagonal yoke part 21 and teeth 22 protruding inward from the yoke part 21. A plurality (six here) of the teeth 22 is arranged in the circumferential direction in this example. Slots 23 (six here) are formed so as to be each individually located between adjacent teeth 22. An insulator 24 made of synthetic resin is fitted inside the stator core 15 from both end sides in the axial direction. Each tooth 22 is wound with a winding 25 through the insulator 24 to thereby form a coil 16. The insulator 24 is provided with a coil terminal (coil connection terminal) 26 (26U, 26V, 26W) corresponding to each phase (three phases of U, V, W here). The coil 16 (winding 25) is electrically connected to each of the coil terminals 26U, 26V and 26W.

The rotor 13 is disposed inside the stator 12. The rotor 13 has a configuration in which a rotary shaft 31, a rotor core 32 and a magnet 33 are coaxially arranged. The rotor core 32 has a cylindrical shape formed by laminating a large number of steel plates and is fitted to the outer periphery of the rotary shaft 31. The magnet 33 is fixed to the outer periphery of the rotor core 32. The magnet 33 is magnetized so as to have a plurality of magnetic poles in the circumferential direction. One end portion of the rotary shaft 31 is freely rotatably supported by a bearing 34 press-fitted to the bottom portion of the motor case 14. The other end of the rotary shaft 31 is freely rotatably supported by bearing metals 35 and 36 fitted, respectively, to bearing holding parts 17c and 17d of the frame 17.

A worm 37 is formed on the rotary shaft 31 at the end portion (right end side in FIG. 1) thereof. The worm 37 mashes with a worm wheel 38 disposed inside the frame 17. The worm 37 and worm wheel 38 constitute the speed reduction mechanism part 3. The worm wheel 38 is mounted to an output shaft 39. In the motor unit 1, rotation of the rotary shaft 31 of the brushless motor 11 is speed-reduced by the speed reduction mechanism part 3 and is transmitted to the output shaft 39, whereby the output shaft 39 is driven into rotation.

The rotary shaft 31 is fitted with a sensor magnet 41 for detecting rotation of the rotor 13. The sensor magnet 41 is magnetized so as to have a plurality of magnetic poles in the circumferential direction. A not-shown hall IC (magnetic detection element) is provided in the frame 17 so as to be opposed to the magnetic poles of the sensor magnet 41. The hall IC is disposed on a control board 42 of the control part 4. The control board 42 has mounted thereon a control IC and elements such as a resistor and a capacitor. The control board 42 and brushless motor 11 are electrically connected to each other by an intermediate terminal (board connection terminal) 43 press-fitted into and fixed to a terminal holding part 17e of the frame 17. The terminal holding part 17e is disposed at a position axially shifted from the bearing holding part 17c. That is, the terminal holding part 17e and bearing holding part 17c are disposed so as not to axially overlap each other. This allows both the terminal holding part 17e and bearing holding part 17c to be formed into a thick solid shape. As a result, rigidity and durability of the frame 17 are improved, whereby reliability and output power can be increased.

In the motor unit 1, the insulator 24 is mounted to the stator core 15, and a stator assembly in which the coil 16 is wound/wired is press-fitted into the frame 17. Thus, the coil terminal 26 (26U, 26V, 26W) of the brushless motor 11 and one end side of the intermediate terminal 43 of each phase are fitted to be electrically connected to each other. At this time, a load to be applied to the intermediate terminal 43 by the connection of the terminals is received by the terminal holding part 17e. After connection of the terminals 26 and 43, the control board 42 is assembled to the frame 17 and then fixed by soldering to the other end side of the intermediate terminal 43. As a result, the control board 42 and brushless motor 11 are electrically connected, thereby allowing the control part 4 to control drive of the brushless motor 11.

The insulator 24 according to the present invention has features different from conventional brushless motors in the following points:
(1) Winding-start position of coil;
(2) Winding tension support structure; and
(3) Falling-down prevention structure for coil terminal mounting part.

Hereinafter, the above features will be described in order.

### (1) Winding-start position of coil

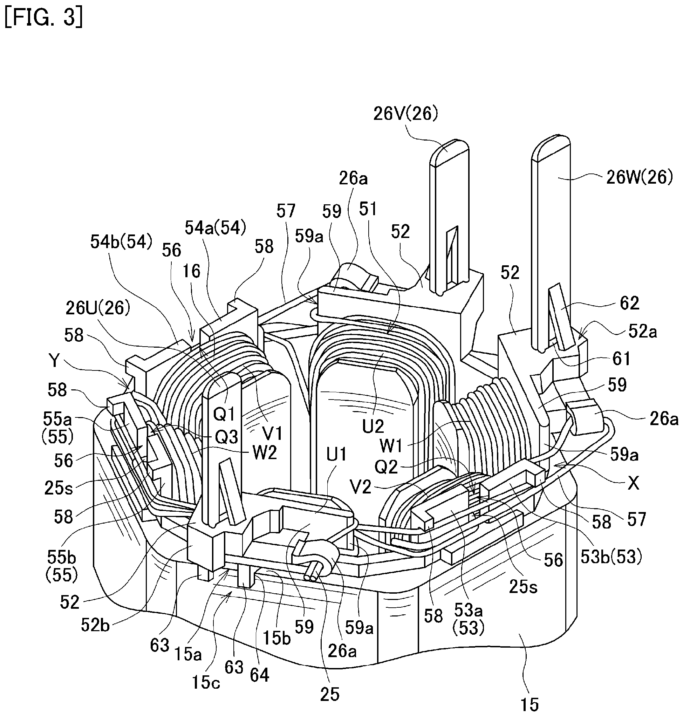

FIG. 3 is an explanatory view illustrating the configuration of the insulator 24 mounted to the stator core 15. As illustrated in FIG. 3, the insulator 24 is provided with coil winding parts 51 each wound with the coil 16 and terminal mounting parts 52 each attached with the coil terminal 26. The insulator 24 has a function of holding the coil terminals 26 in addition to an insulating function. That is, the brushless motor 11 adopts an "insulator/terminal holder integrated type" configuration. By thus integrating the insulator and terminal holder, it is unnecessary to assemble electrical connecting components, making it possible to reduce assembling man-hours and the number of components. Further, assembling dimension error of the coil terminal can be reduced.

There are provided three terminal mounting parts 52, and each terminal mounting part 52 is formed at the back of the coil winding part 51, i.e., formed radially outward. Further, there are formed guide walls (first guide parts) 53 to 55 at the back of the coil winding parts 51 for which no terminal mounting part 52 is provided. By disposing the coil terminal 26 radially outward of the coil 16, it is unnecessary for a nozzle for coil winding to perform "operation for avoiding the terminal" at the time of winding the coil 16. As a result, winding work can be carried out efficiently, and manufacturing man-hours of the stator can be reduced.

In the insulator 24, a slit-like opening 56 is formed in the center of each of the guide walls 53 to 55. The opening 56 allows the inside and outside of each of the guide walls 53 to 55 to radially communicate with each other. Accordingly, each of the guide walls 53 to 55 is divided into two left and right parts (53a and 53b, 54a and 54b, 55a and 55b) by the opening 56. Through the opening 56, a winding 25s which is the winding-start portion of the coil 16 passes. The winding 25 is introduced inward through the opening 56 and wound around the coil winding part 51. Conventionally, the winding 25 at this portion is routed along the guide wall 53 up to a space between adjacent teeth (X part and Y part in FIG. 3) and then wound around the coil winding part 51. Thus, conventionally, four windings 25 are arranged in the X part and five windings in the Y part.

On the other hand, in the insulator 24 according to the present invention, the opening 56 is formed in the center of the guide wall 53, thereby allowing the winding 25s which is the winding-start portion of the coil 16 to be introduced to the coil winding part 51 side through the opening 56. Thus, the number of windings 25 arranged in the X part is reduced by one to be three, and the number of windings 25 arranged in the Y part is reduced by two to be three, whereby wiring congestion in the X part and Y part can be alleviated, thus facilitating installation of a crossover wire. Further, the entire length of the winding 25 is reduced by about half of the lengths of the guide walls 53, that is, by about the lengths of the guide wall 53b, 54b and 55a and, correspondingly, coil resistance can be reduced.

The guide walls 53 and 55 of the insulator 24 each have different heights on the left and right of the opening 56 (the side closer to the coil terminal 26U is higher) . Specifically, in the guide wall 53, the guide wall 53a is higher than the guide wall 53b. On the other hand, in the guide wall 55, the guide wall 55b is higher than the guide wall 55a.

At a portion around the coil terminal 26U, a crossover wire 57 of the winding 25 passes on the inner side of the terminal mounting part 52, where the coil 16 also exists. Thus, in order to ensure a space for passing the crossover wire 57 and to avoid interference between the crossover wire 57 and the coil 16, the crossover wire 57 is preferably arranged as close to the upper side as possible. Thus, in the guide walls 53 positioned on both sides of the terminal mounting part 52, the guide walls 53a and 55b adjacent to the terminal mounting part 52 are increased in height, and the crossover wire 57 is arranged as close to the upper side as possible. Other guide walls 53b and 55a are formed in such a way as to be lower than the guide walls 53a and 55b so that the guide walls 53b and 55a are less apt to fall down by tension of the crossover wire 57 (winding 25) .

A guide protrusion 58 protrudes from the upper portions at both ends of the guide wall 53. The crossover wire 57 arranged inside the terminal mounting part 52 is wired at a high position along the guide walls 53a and 55b while being prevented from coming off upward by the guide protrusion 58. That is, the crossover wire 57 is wired so as to be routed obliquely upward from the guide wall 53b side toward the guide wall 53a side and pass immediately below the guide protrusion 58 to be wired on the inner side of the terminal mounting part 52. In this case, the terminal mounting part 52 is formed high in accordance with the heights of the guide walls 53a and 55b. Thus, on the inner side of the terminal mounting part 52, the crossover wire 57 can be wired on the upper side of the coil 16. This makes it possible to avoid interference between the crossover wire 57 and the coil 16 and further to ensure a winding arrangement space at this portion to thereby eliminate wiring congestion.

### (2) Winding tension support structure

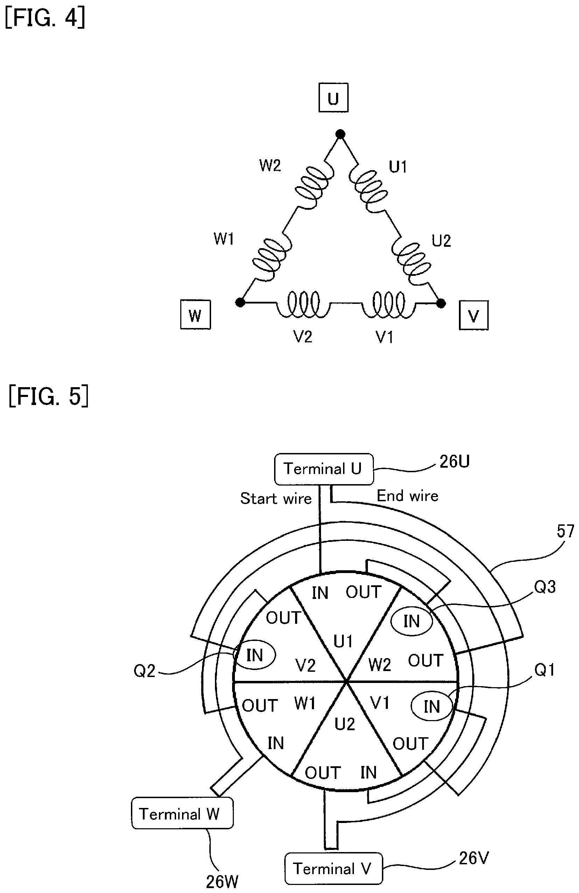

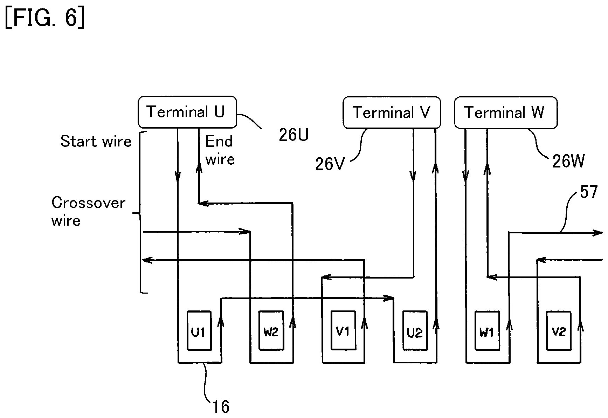

FIG. 4 is a connection diagram of the coil 16, FIG. 5 is an explanatory view illustrating the winding state of the coil 16, and FIG. 6 is a winding developed view of the coil 16. As illustrated in FIG. 4, delta-connection is applied for coil connection, and the coils 16 are connected in a single stroke in which the winding of all slots is completed between start and end wires. As illustrated in FIGS. 5 and 6, winding work is performed in the following order with the coil terminal 26U as a start point:
(a) A U-phase first coil U1 is wound from the coil terminal 2 6U;
(b) After winding of the U1, a U-phase second coil U2 opposed to the U1 with two teeth 22 interposed therebetween is wound;
(c) After winding of the U2, the winding is connected from the U2 to the coil terminal 26V, and a V-phase first coil V1 adjacent to the U2 is wound, and at this time, the winding 25 is drawn through the aforementioned opening 56 of the guide wall 53 for winding of the V1 (Q1 part in FIGS. 3 and 5);
(d) After winding of the V1, a V-phase second coil V2 opposed to the V1 with two teeth 22 interposed therebetween is wound and, in this case as well, the winding 25 is drawn through the opening 56 of the guide wall 53 for winding of the V2 (Q2 part in FIGS. 3 and 5);
(e) After winding of the V2, the winding is connected from the V2 to the coil terminal 26W, and a W-phase first coil W1 adjacent to the V2 is wound;
(f) After winding of the W1, a W-phase second coil W2 opposed to the W1 with two teeth 22 interposed therebetween is wound and, in this case as well, the winding 25 is drawn through the opening 56 of the guide wall 53 for winding of the W2 (Q3 part in FIGS. 3 and 5); and
(g) After winding of the W2, the winding is connected to the coil terminal 26U adjacent to the W2, and in this case, in the coil W2 which is the end portion of the winding work, the winding-start and winding-end portions are located at the same position so as to maintain the tension of the winding 25.

That is, in the brushless motor 11, winding is started from a coil terminal existing alone, the opposing coils 16 having the same phase are wound ((b), (d) and (f)), and then adjacent another phase coil 16 is wound ((c) and (e)). Thus, the insulator having the terminal holders integrated therewith is assembled to the integrally formed stator core 15, and the winding is delta-connected with a single stroke as described above, so that, in the brushless motor 11, an assembly process and winding connection process of electrical connecting components become unnecessary. Therefore, the number of manufacturing processes can be reduced to allow cost reduction.

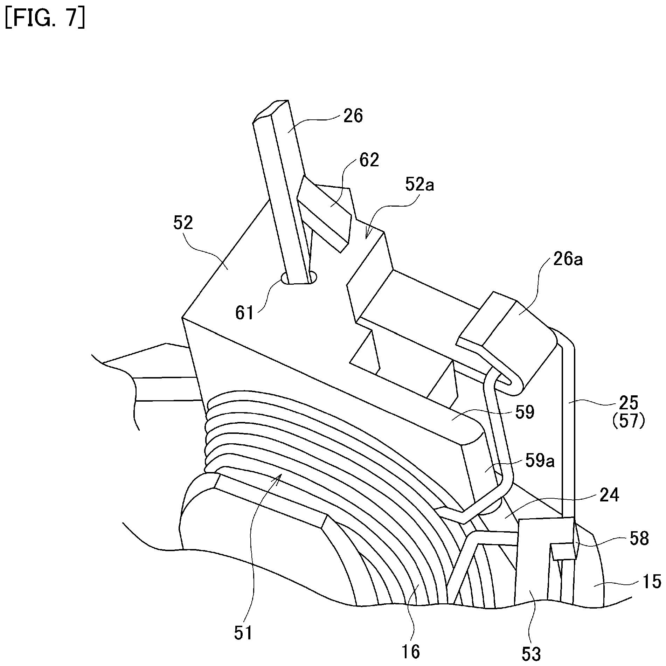

In performing such winding connection, in the insulator 24, the winding 25 is locked to a hook part 26a of the coil terminal 26 in a state of being hooked up to a guide wall (second guide part) 59 provided in each terminal mounting part 52, as illustrated in FIG. 7. As described above, during the single stroke winding, by hooking the winding 25 along an end part 59a of the guide wall 59, tension can be applied to the winding 25 when the winding 25 is to be hooked up to the hook part 26a. In this case, a portion around which the winding 25 is hooked is the guide wall 59 integrally formed with the terminal mounting part 52. Thus, it is possible to ensure higher strength than a pole or a protrusion, thus preventing the guide wall 59 from falling down even when tension is applied to the winding 25. This allows higher tension to be applied to the winding 25, so that it is possible to increase adhesion between the coil terminal 26 and winding 25 and thereby to improve electrical connectivity, such as fusing.

Furthermore, in the winding step (d), when the winding 25 is routed from the V1 to V2, the crossover wire 57 passes over the U1 that has already been wound. Since the coil terminal 26U exists radially outward of the coil U1, the crossover cannot be passed behind the coil terminal 26U. On the other hand, when the crossover pre-exists, it is very difficult to wind the coil U1. In contrast to this, when the winding process as described above is executed, the crossover wire is arranged after the coil is formed, so that the winding work can be performed without any particular trouble. In addition, as described above, the guide walls 53a and 55b are formed high, allowing the crossover wire 57 to pass at a high position, thus making interference with the coil 16 less apt to occur, and this in turn facilitates wiring work.

In addition, unlike general single-stroke winding, there is a portion where the crossover wire passes in a string shape above the coil that has been wound, so that the length of the crossover wire can be shortened. In the other coil terminals 26V and 26W, since the crossover wire 57 does not pass behind them but is hooked up to the hook part 26a and then goes to the adjacent coil 16 on the hook part 26a side, there occurs no problem with routing of the crossover wire.

In addition, in the brushless motor 11, the number of overlapping wires can be suppressed to a maximum of four even at the location where the crossover wires 57 overlap. In this case, for example, in the motor disclosed in JP Patent Application No. 2016-005730, there are six overlapping portions of the crossover wires, and the accommodation and handling of the winding 25 becomes complicated. In this respect, in the brushless motor 11, the number of overlapping crossover wires 57 is four at the maximum, so that the crossover wires can be easily accommodated and held, and the insulator can be reduced in size and weight.

### (3) Falling-down prevention structure for coil terminal mounting part

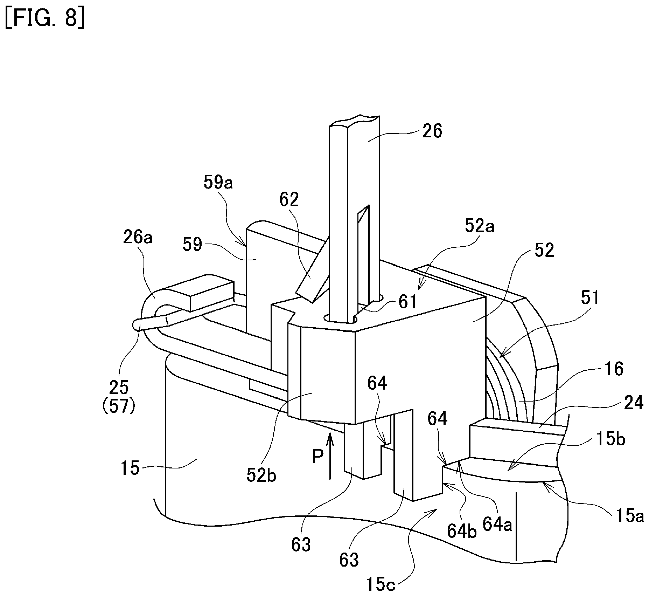

FIG. 8 is an explanatory view illustrating the configuration of the terminal mounting part 52 in the insulator 24. As illustrated in FIG. 8, there is formed, in the terminal mounting part 52, a terminal insertion hole 61 through which the coil terminal 26 is inserted. The coil terminal 26 is inserted into the terminal insertion hole 61 in the direction denoted by arrow P. The coil terminal 26 has an engaging claw 62. When the coil terminal 26 is inserted into the terminal insertion hole 61, the tip end of the engaging claw 62 is engaged with an upper surface 52a of the terminal mounting part 52, whereby the coil terminal 26 is fixed to the terminal mounting part 52 so as to be prevented from coming off.

Two rib legs (abutting parts) 63 are provided on the lower side (opposite side of the upper surface 52a) in the drawing of the terminal mounting part 52 so as to extend downward from a terminal mounting part main body 52b. Each rib leg 63 is formed in a step-like shape and has a cut part 64. The cut part 64 abuts against and fitted to an end edge part 15a of the stator core 15 in a state where the insulator 24 is mounted to the stator core 15. As illustrated in FIG. 8, when the insulator 24 is mounted to the stator core 15, an upper surface 64a of the cut part 64 abuts against an edge surface 15b of the stator core 15. Further, an inner surface (abutting surface) 64b of the cut part 64 abuts against a side surface 15c of the stator core 15.

As described above, when winding is wound on the teeth 22 having the coil terminal 26 at its back side, the terminal mounting part 52 is also applied with a radially outward force by tension at the time of winding and, thus, the terminal mounting part may fall down radially outward. In order to prevent this, in the insulator 24 according to the present invention, the terminal mounting part 52 has the rib leg 63, and the cut part inner surface 64b of the rib leg 63 abuts against the side surface 15c of the stator core 15, so that even when a radially outward force is applied to the terminal mounting part 52, the force can be received by the cut part inner surface 64b. Thus, it is possible to suppress the falling down radially outward of the terminal mounting part 52 due to a tension load at the time of winding and to thereby prevent inclination of the coil terminal 26.

Further, the coil terminal 26 is fitted to the intermediate terminal 43 when the brushless motor 11 is assembled to the frame 17 and receives, at this time, a load from the intermediate terminal 43 side. At this time, the terminal mounting part 52 receives an insertion load of the terminal 43 while being supported on the stator core 15 by the lib leg 63. That is, the terminal mounting part 52 is enhanced in rigidity by the rib leg 63 and thus becomes less likely to be deformed even when receiving the insertion load through the engaging claw 62. As a result, connection work between the coil terminal 26 and the intermediate terminal 43 is facilitated, and damage of the terminal mounting part 52 due to the insertion load is prevented to increase reliability.

The present invention is not limited to the above embodiment, and various modifications may be made without departing from the scope of the invention.

For example, the number of teeth/slots of the brushless motor 11 is merely an example, and the number is not limited to the aforementioned six. Further, there is no problem even if IN/OUT in the winding order is reversed. Similarly, the order of the three-phase UVWs is also arbitrary. For example, the counterclockwise order may be U, W and V. Furthermore, the number of rib legs 63 of the terminal mounting part 52 is not limited to two, but may be one or three or more. When the coil terminal 26 is provided in the terminal mounting part 52 by insert molding, the entire terminal mounting part 52 may be extended downward to configure the abutting part against the side surface 15c of the stator core 15.

### Industrial Applicability

The present invention may be widely applicable to, for example, on-vehicle motors used as drive sources for power windows, sliding doors, rear gates and oil pumps; various electric products such as home appliances; and industrial equipment such as robots and electric machines, in addition to the motor for the sunroof.

### Reference Signs List

1: Motor unit
2: Motor part
3: Speed reduction mechanism
4: Control part
11: Brushless motor
12: Stator
13: Rotor
14: Motor case
15: Stator core
15a: End edge part
15b: Edge surface
15c: Side surface
16: Coil
17: Frame
17a: Flange part
17b: Screw hole
17c: Bearing holding part
17d: Bearing holding part
17e: Terminal holding part
18: Cover
19: Screw
21: Yoke part
22: Teeth
23: Slot
24: Insulator
25: Winding
25s: Winding
26: Coil terminal (coil connection terminal)
26U, 26V, 26W: Coil terminal
26a: Hook part
31: Rotary shaft
32: Rotor core
33: Magnet
34: Bearing
35: Bearing metal
36: Bearing metal
37: Worm
38: Worm wheel
39: Output shaft
41: Sensor magnet
42: Control board
43: Intermediate terminal
51: Coil winding part
52: Terminal mounting part
52a: Upper surface
52b: Main body
53: Guide wall (first guide part)
53a, 53b: Guide wall
54: Guide wall
54a, 54b: Guide wall
55: Guide wall
55a, 55b: Guide wall
56: Opening
57: Crossover wire
58: Guide protrusion
59: Guide wall (second guide part)
59a: End part
61: Terminal insertion hole
62: Engaging claw
63: Rib leg
64: Cut part
64a: Upper surface
64b: Inner surface
U1: U-phase first coil
U2: U-phase second coil
V1: V-phase first coil
V2: V-phase second coil
W1: W-phase first coil
W2: W-phase second coil

## Claims

1. A brushless motor (1) comprising:
a stator (12) provided with coils (16) of three phases (U, V, W) wound with a winding (25) and an insulator (24) for insulation of the coil (16) provided with coil winding parts (51) each wound with the winding (25) and
a rotor (13) having a magnet (33) and freely rotatably disposed inside the stator (12), wherein
six coils (16) are provided two for each phase and the six coils (16) are arranged in the order of a U-phase first coil (U1), a W-phase second coil (W2), a V-phase first coil (V1), a U-phase second coil (U2), a W-phase first coil (W1), a V-phase second coil (V2) along the circumferential direction, the coils (16) being wound in the order of U-phase first coil (U1), U-phase second coil (U2), V-phase first coil (V1), V-phase second coil (V2), W-phase first coil (W1), W-phase second coil (W2) in a single stroke,
the insulator (24) wound with the coil (16) of the U-phase first coil (U1), U-phase second coil (U2) and W-phase first coil (W1) has terminal mounting parts (52) each provided radially outward of the coil winding part (51) and each having a coil connection terminal (26) to which the winding (25) is connected; and
the insulator (24) wound with the coil (16) of the V-phase first coil (V1), V-phase second coil (V2) and W-phase second coil (W2) has first guide parts (53) provided radially outward of the coil winding parts (51) not having the terminal mounting part (52) and configured to guide the winding (25), wherein
a crossover wire (57) connected between the V-phase coils (V1, V2) passes on the inner side of the terminal mounting part (52) at the insulator (24) having the U-phase coil connection terminal (26) wound with the coil (16) of the U-phase first coil (U1) and **characterized in that** the first guide part (53) has an opening (56) that allows the inside and outside of the first guide part (53) to radially communicate with each other, and the opening (56) is configured with a winding start portion (25s) of the coil (16) inserted therethrough.

2. The brushless motor (1) according to claim 1, **characterized in that**
the first guide part (53) is divided into two parts along the circumferential direction by the opening (56), and
in the first guide part (53) provided at the insulator (24) wound with the coil (16) of V-phase second coil (V2) and W-phase second coil (W2), the adjacent U-phase first coil (U1) side part thereof is higher than that of the other side.

3. The brushless motor (1) according to claim 2, **characterized in that**
the crossover wire (57) passes over the coil of the u-phase first coil (U1) that has already been wound while being guided to the portion on the side where the height of the first guide part (53) is higher.

4. The brushless motor (1) according to claim 2 or 3, **characterized in that**
the first guide part (53) has a guide protrusion (58) at both ends along the circumferential direction thereof,
the crossover wire (57) connecting between the coils (16) is wired so as to be routed obliquely upward while being prevented from coming off upward by the guide protrusion (58).

5. The brushless motor (1) according to any one of claims 1 to 4, **characterized in that**
the insulator (24) is mounted to a stator core (15) of the stator (12), and
each of the terminal mounting parts (52) has an abutting part (63) that abuts against a side surface (15c) of the stator core (15) when the insulator (24) is mounted to the stator core (15) and receives a radially outward force applied to the terminal mounting part (52) by tension generated at the time of coil winding.

6. The brushless motor (1) according to any one of claims 1 to 4, **characterized in that**
the coil connection terminal (26) has a hook part (26a) to which the winding (25) is locked, and
the terminal mounting part (52) has a wall-like second guide part (59) to which the winding locked to the hook part (26a) is hooked while being applied tension.

## Patentansprüche

1. Bürstenloser Motor (1), umfassend:
einen Stator (12), der mit Spulen (16) von drei Phasen (U, V, W) versehen ist, die mit einer Wicklung (25) gewickelt sind, und einen Isolator (24) zur Isolierung der Spule (16), der mit Spulenwicklungsteilen (51) versehen ist, die jeweils mit der Wicklung (25) gewickelt sind, und
einen Rotor (13), der einen Magneten (33) aufweist und frei drehbar im Inneren des Stators (12) angeordnet ist, wobei
sechs Spulen (16) vorgesehen sind, zwei für jede Phase, und die sechs Spulen (16) in der Reihenfolge einer ersten U-Phasenspule (U1), einer zweiten W-Phasenspule (W2), einer ersten V-Phasenspule (V1), einer zweiten U-Phasenspule (U2), einer ersten W-Phasenspule (W1), einer zweiten V-Phasenspule (V2) entlang der Umfangsrichtung angeordnet sind, wobei die Spulen (16) in der Reihenfolge erste U-Phasenspule (U1), zweite U-Phasenspule (U2), erste V-Phasenspule (V1), zweite V-Phasenspule (V2), erste W-Phasenspule (W1), zweite W-Phasenspule (W2) in einem einzigen Hub gewickelt sind,
der Isolator (24), der mit der Spule (16) der ersten U-Phasenspule (U1), der zweiten U-Phasenspule (U2) und der ersten W-Phasenspule (W1) gewickelt ist, Klemmenmontageteile (52) aufweist, die jeweils radial außerhalb des Spulenwicklungsteils (51) vorgesehen sind und jeweils eine Spulenanschlussklemme (26) aufweisen, mit der die Wicklung (25) verbunden ist; und
der Isolator (24), der mit der Spule (16) der ersten V-Phasenspule (V1), der zweiten V-Phasenspule (V2) und der zweiten W-Phasenspule (W2) gewickelt ist, erste Führungsteile (53) aufweist, die radial außerhalb der Spulenwicklungsteile (51) vorgesehen sind, die nicht das Klemmenmontageteil (52) aufweisen, und so ausgebildet sind, dass sie die Wicklung (25) führen, wobei
ein zwischen die V-Phasenspulen (V1, V2) geschalteter Überkreuzungsdraht (57) an der Innenseite des Klemmenmontageteils (52) an dem Isolator (24) vorbeiführt, der die mit der Spule (16) der ersten U-Phasenspule (U1) gewickelte U-Phasenspulenanschlussklemme (26) aufweist, und **dadurch gekennzeichnet, dass** das erste Führungsteil (53) eine Öffnung (56) aufweist, die es der Innenseite und der Außenseite des ersten Führungsteils (53) ermöglicht, radial miteinander in Verbindung zu stehen, und die Öffnung (56) so ausgebildet ist, dass ein Wicklungsanfangsabschnitt (25s) der Spule (16) durch sie hindurch eingesetzt ist.

2. Bürstenloser Motor (1) nach Anspruch 1, **dadurch gekennzeichnet, dass**
das erste Führungsteil (53) durch die Öffnung (56) entlang der Umfangsrichtung in zwei Teile geteilt ist, und
in dem ersten Führungsteil (53), das an dem Isolator (24) vorgesehen ist, der mit der Spule (16) der zweiten V-Phasenspule (V2) und der zweiten W-Phasenspule (W2) gewickelt ist, das daran angrenzende Seitenteil der ersten U-Phasenspule (U1) höher ist als der anderen Seite.

3. Bürstenloser Motor (1) nach Anspruch 2, **dadurch gekennzeichnet, dass**
der Überkreuzungsdraht (57) über die Spule der ersten U-Phasenspule (U1), die bereits gewickelt wurde, läuft und dabei zu dem Abschnitt auf der Seite geführt wird, wo die Höhe des ersten Führungsteils (53) höher ist.

4. Bürstenloser Motor (1) nach Anspruch 2 oder 3, **dadurch gekennzeichnet, dass**
das erste Führungsteil (53) an beiden Enden entlang seiner Umfangsrichtung einen Führungsvorsprung (58) aufweist,
der Überkreuzungsdraht (57), der die Spulen (16) miteinander verbindet, so verdrahtet ist, dass er schräg nach oben geführt wird, während er durch den Führungsvorsprung (58) daran gehindert wird, sich nach oben zu lösen.

5. Bürstenloser Motor (1) nach einem der Ansprüche 1 bis 4, **dadurch gekennzeichnet, dass**
der Isolator (24) an einem Statorkern (15) des Stators (12) befestigt ist, und
jedes der Klemmenmontageteile (52) ein Anschlagteil (63) aufweist, das an einer Seitenfläche (15c) des Statorkerns (15) anliegt, wenn der Isolator (24) an dem Statorkern (15) montiert ist, und eine radial nach außen gerichtete Kraft aufnimmt, die auf das Klemmenmontageteil (52) durch die beim Wickeln der Spule erzeugte Spannung ausgeübt wird.

6. Bürstenloser Motor (1) nach einem der Ansprüche 1 bis 4, **dadurch gekennzeichnet, dass**
die Spulenanschlussklemme (26) ein Hakenteil (26a) aufweist, an dem die Wicklung (25) verriegelt ist, und
das Klemmenmontageteil (52) ein wandartiges zweites Führungsteil (59) aufweist, an dem die mit dem Hakenteil (26a) verriegelte Wicklung unter Spannung eingehakt ist.

## Revendications

1. Moteur sans balais (1) comprenant :
un stator (12) pourvu de bobines (16) de trois phases (U, V, W) enroulées avec un enroulement (25) et un isolant (24) pour l'isolation de la bobine (16) pourvu de parties (51) d'enroulement de bobine enroulées chacune avec l'enroulement (25) et
un rotor (13) ayant un aimant (33) et disposé de manière à pouvoir tourner librement à l'intérieur du stator (12), dans lequel
six bobines (16) sont prévues, deux pour chaque phase et les six bobines (16) sont agencées dans l'ordre d'une première bobine de phase U (U1), une seconde bobine de phase W (W2), une première bobine de phase V (V1), une seconde bobine de phase U (U2), une première bobine de phase W (W1), une seconde bobine de phase V (V2) le long de la direction circonférentielle, les bobines (16) étant enroulées dans l'ordre de première bobine de phase U (U1), seconde bobine de phase U (U2), première bobine de phase V (V1), seconde bobine de phase V (V2), première bobine de phase W (W1), seconde bobine de phase W (W2) en une seule fois,
l'isolant (24) enroulé avec la bobine (16) de la première bobine de phase U (U1), la seconde bobine de phase U (U2) et la première bobine de phase W (W1) a des parties (52) de montage de borne chacune prévue radialement à l'extérieur de la partie d'enroulement de bobine (51) et chacune ayant une borne (26) de connexion de bobine à laquelle l'enroulement (25) est connecté ; et
l'isolant (24) enroulé avec la bobine (16) de la première bobine de phase V (V1), la seconde bobine de phase V (V2) et la seconde bobine de phase W (W2) a des premières parties (53) de guidage prévues radialement à l'extérieur des parties (51) d'enroulement de bobine n'ayant pas la partie (52) de montage de borne et conçues pour guider l'enroulement (25), dans lequel
un câble de croisement (57) connecté entre les bobines de phase V (V1, V2) passe sur le côté interne de la partie (52) de montage de borne au niveau de l'isolant (24) ayant la borne (26) de connexion de bobine de phase U enroulée avec la bobine (16) de la première bobine de phase U (U1) et **caractérisé en ce que** la première partie (53) de guidage a une ouverture (56) qui permet à l'intérieur et l'extérieur de la première partie (53) de guidage de communiquer radialement l'un avec l'autre, et l'ouverture (56) est conçue avec une portion (25s) de début d'enroulement de la bobine (16) insérée à travers elle.

2. Moteur sans balais (1) selon la revendication 1, **caractérisé en ce que**
la première partie (53) de guidage est divisée en deux parties le long de la direction circonférentielle par l'ouverture (56), et
dans la première partie (53) de guidage prévue au niveau de l'isolant (24) enroulé avec la bobine (16) de la seconde bobine de phase V (V2) et la seconde bobine de phase W (W2), la partie côté première bobine de phase U (U1) adjacente de celle-ci est plus haute que celle de l'autre côté.

3. Moteur sans balais (1) selon la revendication 2, **caractérisé en ce que**
le câble de croisement (57) passe sur la bobine de la première bobine de phase u (U1) qui a déjà été enroulée tout en étant guidé vers la portion sur le côté sur lequel la hauteur de la première partie (53) de guidage est supérieure.

4. Moteur sans balais (1) selon la revendication 2 ou la revendication 3, **caractérisé en ce que**
la première partie (53) de guidage a une saillie (58) de guidage au niveau des deux extrémités le long de la direction circonférentielle de celle-ci,
le câble de croisement (57) connectant entre les bobines (16) est câblé de manière à être acheminé obliquement vers le haut tout en étant empêché de sortir vers le haut par la saillie (58) de guidage.

5. Moteur sans balais (1) selon l'une quelconque des revendications 1 à 4, **caractérisé en ce que**
l'isolant (24) est monté sur un noyau (15) de stator du stator (12), et
chacune des parties (52) de montage de borne a une partie (63) en butée qui vient en butée contre une surface latérale (15c) du noyau (15) de stator lorsque l'isolant (24) est monté sur le noyau (15) de stator et reçoit une force radialement vers l'extérieur appliquée sur la partie (52) de montage de borne par la tension générée au moment de l'enroulement de bobine.

6. Moteur sans balais (1) selon l'une quelconque des revendications 1 à 4, **caractérisé en ce que**
la borne (26) de connexion de bobine a une partie (26a) formant crochet sur laquelle l'enroulement (25) est verrouillé, et
la partie (52) de montage de borne a une seconde partie (59) de guidage de type paroi à laquelle l'enroulement verrouillé sur la partie (26a) formant crochet est accroché pendant que de la tension lui est appliquée.
